# EUROPEAN PATENT APPLICATION

(11) **EP 2 037 455 A1**
(43) Date of publication of application: **18.03.2009**
(21) Application number: 08015153.3
(22) Date of filing: 27.08.2008
(51) Int. Cl.: G11B 7/08, G11B 7/0065, G11B 7/135, G11B 7/00

(54) **Optical data storage device for holographic media and blu-ray / HD-DVD optical discs.**

(30) Priority: 13.09.2007 JP 2007237617
(71) Applicant: Hitachi Ltd., Chiyoda-ku Tokyo 100-8280 (JP)
(72) Inventor: Ide, Tatsuro, Tokyo 100-8220 (JP); Shimada, Kenichi, Tokyo 100-8220 (JP)
(74) Representative: Beetz & Partner

(57) **Abstract**

The present invention aims to provide an optical data storage device (10) capable of not only recording digital information by using holography, but also recording or reproducing information onto or from conventional optical discs represented by BD (100). In the optical data storage device (10) of the present invention, a single light source (501) is used for generation of both an optical beam for holographic medium (1) curing and an optical beam for recording or reproducing information onto or from a BD or an HD DVD (100). Furthermore, the optical beam for holographic medium (1) curing and the optical beam for recording or reproduction of information onto or from a BD or an HD DVD (100) are designed to go through optical paths partly including a common optical path. In this configuration, multiple optical system configurations can be reasonably placed together into a single case.

## Description

### CLAIM OF PRIORITY

The present application claims priority from Japanese application JP 2007-237617 filed on September 13, 2007, the content of which is hereby incorporated by reference into this application.

### BACKGROUND OF THE INVENTION

### 1. Field of the Invention

The present invention relates to a device which uses holography to record information onto an optical information recording medium and/or to recover information from an optical information recording medium.

### 2. Description of the Related Art

Owing to the development of the Blu-ray Disc (BD) specification, the High Definition Digital Versatile Disc (HD DVD) specification, and the like, which utilize a blue-violet semiconductor laser, optical discs having a data capacity of approximately 50 GB are currently available for consumer use as well on a commercial basis. In the future, it is desired that optical discs achieve a capacity as large as 100 GB to 1 TB, which is equivalent to that of a hard disc drive (HDD). However, in order to achieve such an extra-high density in optical discs, required is a novel storage technology outside of the trend in the conventional high-density technology where a shorter wavelength and a higher numerical aperture of an objective lens have been sought. Amid the progress of studies regarding the next generation storage technology, a holographic recording technique for recording digital information by using holography has been attracting attention.

The holographic recording technique is a method for recording information with a signal light and a reference light. More specifically, the signal light is two-dimensionally modulated by a spatial light modulator (SLM) and contains information on page data. The signal light and the reference light are superimposed with each other inside a recording medium to obtain an interference pattern, and the interference pattern is used to cause a refractive-index modulation inside the recording medium to record the information. When the information is to be recovered, the recording medium is irradiated with the reference light, which has been used for the recording, in the same arrangement, and a hologram recorded in the recording medium acts as a diffraction grading to generate a diffraction beam. This diffraction beam is recovered as a beam identical to the recorded signal light containing identical phase information. The signal light thus recovered is two-dimensionally detected at a high speed using a photodetector, such as a complementary metal-oxide semiconductor (CMOS) and a charge-coupled device (CCD). The holographic recording technique based on such a principle allows two-dimensional information to be recorded and recovered at the same time in a single hologram, and enables multiple page data to be overwritten in one region; thus, this technique is effective for recording and reproduction of large-volume information at a high speed.

Methods based on the holographic recording technique are disclosed in Japanese Patent Application Publication No. 2004-272268 (Patent Document 1) and "The InPhase Professional Archive Drive OMA: Design and Function" by Ian Redmond, Optical Data Storage Topical Meeting, 2006 (Non-Patent Document 1), for example. These documents describe a so-called angle multiplexing method in which: an optical information recording medium is simultaneously irradiated with a signal light focused on an optical information recording medium by a lens, and with a reference light, which is a parallel optical beam, thereby causing interference between the signal light and the reference light to record a hologram. Furthermore, different page data pieces are displayed in an SLM while the incident angle of the reference light entering the optical recording medium is being changed so that multiplexed recording is performed. Patent Document 1 further describes a method which is capable of shortening a distance between neighboring holograms by converging a signal light with a lens and by arranging an aperture (spacial filter) at a beam waist of the converged signal light, and capable of increasing a recording density and capacity compared to a conventional angle multiplexing method. In addition, WO 2004-102542 (Patent Document 2) describes an example of application of a shift multiplexing method of recording a hologram by focusing, on an optical recording medium with a single lens, a signal light from internal pixels and a reference light from annular pixels surrounding the internal pixels in an SLM, to cause the signal light and the reference light to interfere with each other near the focal plane of the lens.

### SUMMARY OF THE INVENTION

Meanwhile, an optical data storage device for recording digital information by using holography requires not only an optical system that generates a signal light and a reference light, and irradiates a recording medium with these two lights as described in Non-Patent Document 2, but also an optical system that generates an optical beam for curing used in pre-curing and post-curing treatments, and irradiates the recording medium with the generated optical beam. The pre-curing treatment here refers to a pre-process in which an intended region in a recording medium where information is to be recorded is irradiated with an optical beam having a predetermined energy prior to irradiation with a reference light and a signal light for recording of the information in the intended region. The post-curing treatment here refers to a post-process in which an intended region in a recording medium is irradiated with an optical beam having a predetermined energy in order to make the region unrecordable after information is recorded in the intended region by using a signal light and a reference light.

Furthermore, for example, in terms of backward compatibility, in the case where conventional optical discs, represented by BD and HD DVD, are to be recorded or recovered by a single device, the device needs to be additionally provided with an optical system which is capable of recording or reproducing information onto or from these optical discs.

In order to make the device smaller, it is desirable that multiple optical systems have a shared physical configuration as much as possible. However, there have been no technology regarding an optical data storage device fulfilling such a demand or no technology regarding a configuration of such an optical system disclosed yet at all.

The present invention was conducted in view of the problems described above, and aims to provide an optical data storage device capable of not only recording or reproduction information by using holography and but also recoding or reproducing conventional optical discs, such as BD and HD DVD.

The optical data storage device of the present invention includes: a first optical pickup having a first laser light source which generates a signal light and a reference light for holographic recording; and a second optical pickup having a second laser light source which generates an optical beam for a curing treatment of a holographic recording medium. Furthermore, the optical data storage device of the present invention is capable of recording and reproducing information onto and from BD and HD DVD by using the optical beam emitted from the second laser light source.

In one example, the second optical pickup includes an optical element for changing a polarization state of the optical beam emitted from the second laser light source and a beam splitter for switching optical paths depending on the polarization state of the optical beam. The beam splitter switches between the optical beam for the curing treatment and the optical beam for recording and reproduction of information onto and from BD and HD DVD. In another example, the second optical pickup includes an objective lens for BD or HD DVD and a lens actuator for driving the objective lens relative to an optical axis. The lens actuator is provided with an optical path for the optical beam for the curing treatment in addition to that for the objective lens reference beam, and switches the optical paths to which the optical beam emitted from the second laser light source goes after passing through the lens actuator according to whether to perform the curing treatment or to perform recording and reproduction of information onto and from BD or HD DVD. The optical path for the optical beam for the curing treatment may include an aperture stop which provides variability in the diameter of the optical beam.

According to the present invention, an optical data storage device using holography can be miniaturized by having multiple optical systems sharing a physical configuration, and also can be made capable of recording or reproducing information onto or from optical discs, such as BD and HD DVD.

### BRIEF DESCRIPTION OF THE DRAWING

Fig. 1 is a schematic diagram illustrating an embodiment of an optical data storage device.
Fig. 2 is a schematic diagram illustrating an example of an optical pickup in the optical data storage device.
Fig. 3 is a schematic diagram illustrating an example of the optical pickup in the optical data storage device.
Fig. 4 is a schematic diagram illustrating an example of the optical data storage device.
Fig. 5 is a schematic diagram illustrating an example of a medium curing optical system in the optical data storage device.
Figs. 6A to 6C are schematic diagrams illustrating an example of an operation flow of the optical data storage device.
Fig. 7 is a schematic diagram illustrating an example of the medium curing optical system in the optical data storage device.
Fig. 8 is a schematic diagram illustrating an example of the optical data storage device.
Fig. 9 is a schematic diagram illustrating an example of the medium curing optical system in the optical data storage device.
Fig. 10 is a schematic diagram illustrating an example of the medium curing optical system in the optical data storage device.
Fig. 11 is a schematic diagram illustrating an example of the medium curing optical system in the optical data storage device.

### DESCRIPTION OF THE PREFERRED EMBODIMENTS

In the following section, an embodiment of the present invention will be described.

### [An overall configuration of an optical data storage device]

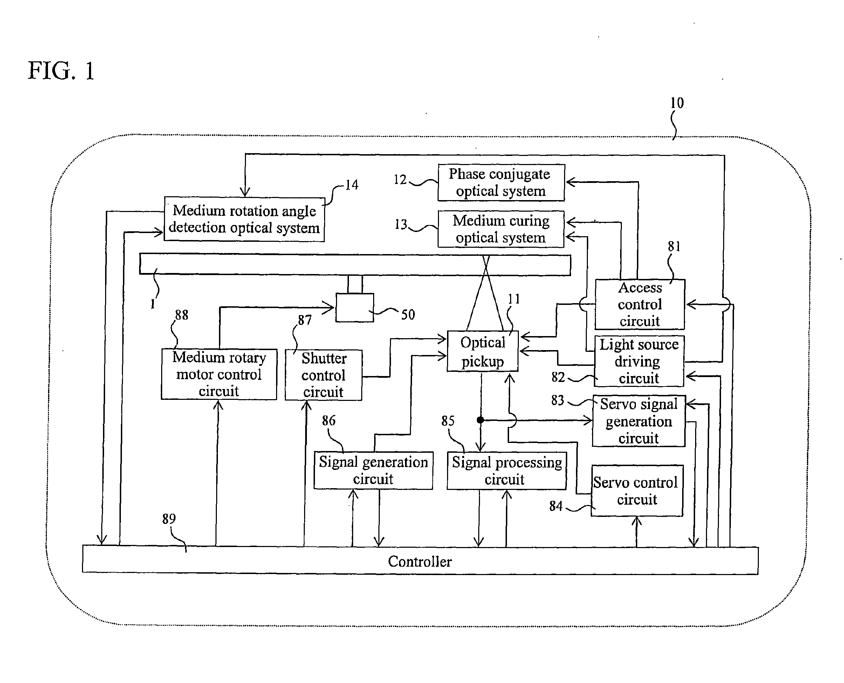

Fig. 1 illustrates an overall configuration of an optical data storage device for recording and/or recovering of digital information by using holography.

An optical data storage device 10 includes an optical pickup 11, a phase conjugate optical system 12, a medium curing optical system 13, a medium rotation angle detection optical system 14, and a rotary motor 50. A holographic recording medium 1 is configured to be rotatable by the rotary motor 50. The optical pickup 11 irradiates the holographic recording medium 1 with a reference light and a signal light to record digital information by using holography. In this recording, the information signal to be recorded is sent to a spatial light modulator, which will be described later, located in the optical pickup 11 via a signal generation circuit 86 by a controller 89, and the signal light is modulated in the spatial light modulator.

When the information recorded in the holographic recording medium 1 is to be recovered, a phase conjugate light of the reference light emitted from the optical pickup 11 is generated by the phase conjugate optical system 12. Phase conjugate light here refers to an optical wave which proceeds in the opposite direction to that of an input light while maintaining the same wave front as the input light. A recovered light recovered by the phase conjugate light is detected by a photodetector, which will be described later, located in the optical pickup 11, and a signal is recovered by a signal processing circuit 85.

The irradiation time of the reference light and the signal light irradiated on the holographic recording medium 1 can be adjusted by controlling the opening and closing time of a shutter, which will be described later, located in the optical pickup 11 by the controller 89 via a shutter control circuit 87.

The medium curing optical system 13 generates a curing optical beam used for pre-cure and post-cure treatments on the holographic recording medium 1. The pre-cure treatment here refers to a pre-treatment process for recording information in a desired location in the holographic recording medium 1 by irradiating the medium with an optical light having a predetermined energy prior to the irradiation of the desired location with a reference light and a signal light. The post-cure treatment here refers to a post-treatment process for making the desired location in the holographic recording medium 1, where information has been recorded, unavailable for further editing by irradiating the location with an optical beam having a predetermined energy.

The medium rotation angle detection optical system 14 is used for detecting an angle of rotation of the holographic recording medium 1. In the case where the holographic recording medium 1 is to be adjusted to be at a predetermined rotation angle, the medium rotation angle detection optical system 14 detects a signal corresponding to the rotation angle, the controller 89 controls the rotary motor 50 via a medium rotary motor control circuit 88 according to the detected signal, and thereby the rotation angle of the holographic recording medium 1 can be controlled.

A predetermined light source driving current is supplied to light sources each located in the optical pickup 11, the medium curing optical system 13, and the medium rotation angle detection optical system 14 from a light source driving circuit 82, and each of the light sources is capable of emitting an optical beam having a predetermined optical intensity. Furthermore, the optical pickup 11, the phase conjugate optical system 12, and the medium curing optical system 13 are provided with a mechanism which allows each of them to slide the position thereof in a radial direction of the holographic recording medium 1, and thereby their positions are controlled via an access control circuit 81.

In the meantime, being capable of recording extra-high density information, a recording technique using holography tends to permit only an extremely small margin for error, for example, in terms of tilt and displacement of the holographic recording medium 1. For this reason, a servo mechanism may be provided in the optical data storage device 10 by providing, in the optical pickup 11, a mechanism for detecting an amount of displacement in factors which allow a small margin for error, such as tilt and displacement of the holographic recording medium 1. The servo mechanism allows the displacement to be corrected via a servo control circuit 84 by generating a servo control signal in a servo signal generation circuit 83.

As for the optical pickup 11, the phase conjugate optical system 12, the medium curing optical system 13, and the medium rotation angle detection optical system 14, some optical system configurations or all of the optical system configurations may be combined together into a single configuration for simplification.

### [An example of the optical pickup optical system configuration]

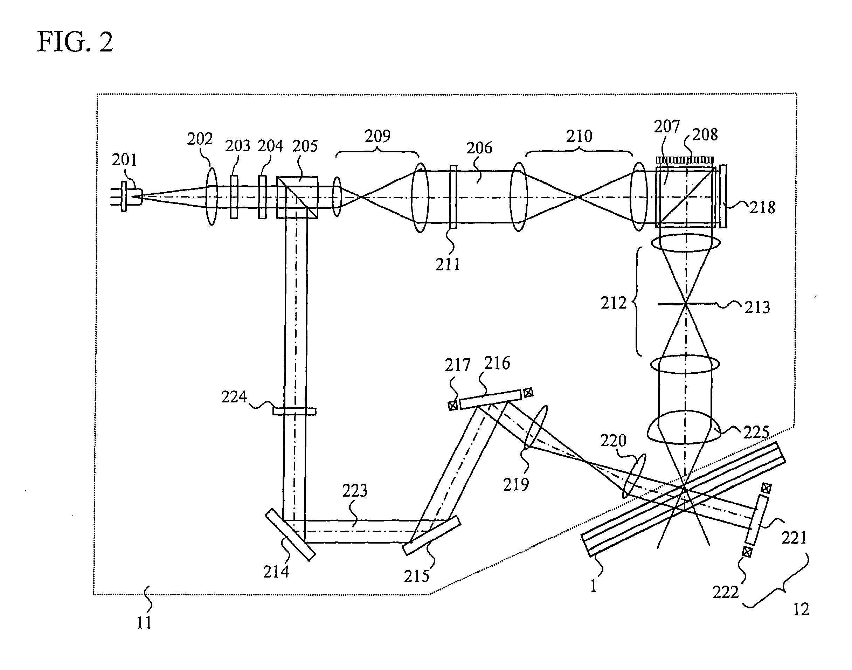

Fig. 2 illustrates an example of the optical system configuration of the optical pickup 11 in the optical data storage device 10.

An optical beam emitted from a light source 201 goes through a collimating lens 202 and then enters a shutter 203. When the shutter 203 is open, the optical beam which has gone through the shutter 203 is adjusted in terms of the polarization direction so as to achieve a desired ratio between the amounts of P polarization and S polarization by an optical element 204 made of, for example, a half wave plate, and then enters a polarization beam splitter 205.

The optical beam 206 which has gone through the polarization beam splitter 205 is enlarged in terms of the optical beam radius by a beam expander 209, goes through a phase mask 211, a relay lens 210, and a polarization beam splitter 207, and then enters a spatial light modulator 208. The optical beam is added with information by the spatial light modulator 208 to be a signal beam, and the signal beam 206 goes through the polarization beam splitter 207, and then travels through a relay lens 212 and a spatial filter 213. Thereafter, the signal beam is focused on the holographic recording medium 1 by an objective lens 225.

In the meantime, an optical beam 223 reflected from the polarization beam splitter 205 serves as a reference beam. After having been set to have a predetermined polarization direction for recording or for recovering by an optical element 224, the optical beam 223 travels via a mirror 214 and a mirror 215 and enters a galvo mirror 216. Since the angle of the galvo mirror 216 can be adjusted by an actuator 217, it is possible to achieve a desired angle of the reference beam entering the information recording medium 1 after having gone through a lens 219 and a lens 220.

In the configuration as described above, an interference pattern is formed within the holographic recording medium 1 by causing the signal light beam 206 and the reference beam 223 to superimpose with each other upon entering the recording medium, and the pattern is formed on the recording medium to record the information. In addition, since the incident angle of the reference beam entering the holographic recording mediums 1 can be changed by the galvo mirror 216, angle multiplexed recording can be performed.

When the recorded information is to be recovered, as described above, the reference beam is caused to enter the holographic recording medium 1, and the optical beam having gone through the holographic recording medium 1 is reflected by a galvo mirror 221 to create a phase conjugate light of the reflected optical beam. The galvo mirror 221, which can be adjusted in terms of the angle by an actuator 222, is driven in conjunction with the galvo mirror 216 when the information recorded in the holographic recording medium 1 is recovered.

A recovered beam which has been recovered by the phase conjugate light travels through the objective lens 225, the relay lens 212, and the spacial filter 213. Thereafter, the recovered optical beam is reflected by the polarization beam splitter 207, and then enters a photodetector 218 to allow reproduction of the recorded signal.

### [Another example of the optical pickup optical system configuration]

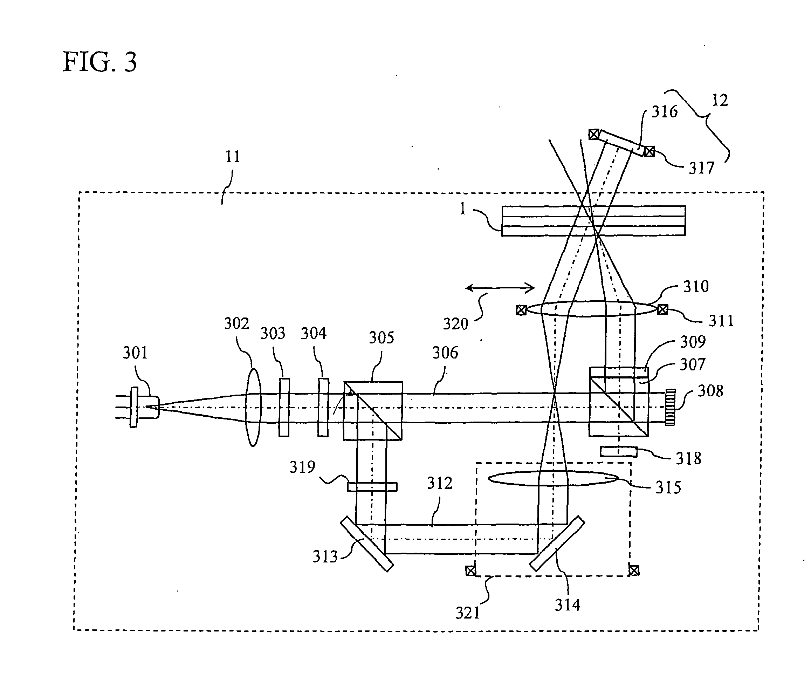

It should be noted that the optical system of the optical pickup 11 is not limited to that illustrated in Fig. 2, and a configuration illustrated in Fig. 3 may also be employed.

In Fig. 3, an optical beam emitted from a light source 301 goes through a collimating lens 302 and then enters a shutter 303. When the shutter 303 is open, the optical beam which has gone through the shutter 303 is adjusted in terms of the polarization direction so as to achieve a desired ratio between the amounts of P polarization and S polarization by an optical element 304 made of, for example, a half wave plate, and then enters a polarization beam splitter 305.

The optical beam 306 which has gone through the polarization beam splitter 305 travels via a polarization beam splitter 307 and enters a spatial light modulator 308. The optical beam 306 is added with information by the spatial light modulator 308 to become a signal light beam 306, and the signal light beam 306 is reflected by the polarization beam splitter 307, and travels through an angle filter 309 which allows only an optical beam having a predetermined incident angle to go through. Thereafter, the signal light beam is converged on the holographic recording medium 1 by a objective lens 310.

In the meantime, an optical beam reflected from the polarization beam splitter 305 serves as a reference beam 312. After having been set to have a predetermined polarization direction for recording or for reproduction by an optical element 319, the optical beam travels through a mirror 313 and a mirror 314 and enters a lens 315. The lens 315 is arranged in the location to focus the reference beam 312 on the back focal plane of the objective lens 310. The reference beam converged on the back focus surface of the objective lens 310 is again converted to a parallel light by the objective lens 310, and then enters the holographic recording medium 1.

In this configuration, the objective lens 310 or an optical block 321 can be moved in a direction indicated by, for example, an arrow 320. When the objective lens 310 or the optical block 321 is shifted along the driving direction 320, the relative positional relationship between the objective lens 310 and the light convergent point on the back focal plane of the objective lens 310 is changed. Therefore, it is possible to achieve a desired incident angle of the reference beam entering the holographic recording medium 1.

In the configuration as described above, an interference pattern is formed within the holographic recording medium 1 by causing the signal light beam and the reference beam to superimpose with each other upon entering the recording medium, and the pattern is written on the recording medium to record the information. In addition, since the incident angle of the reference beam entering the holographic recording mediums 1 can be changed by shifting the position of the objective lens 310 or the optical block 321 along the driving direction 320, angle multiplexed recording can be performed.

When the recorded information is to be recovered, as described above, the reference beam is caused to enter the holographic recording medium 1, and the optical beam having gone through the holographic recording medium 1 is reflected by a galvo mirror 316 to create a phase conjugate light of the reflected optical beam. A recovered optical beam which has been recovered by the phase conjugate light travels through the objective lens 310 and the angle filter 309. Thereafter, the recovered optical beam goes through the polarization beam splitter 307, and then enters a photodetector 318 to allow reproduction of the recorded signal.

The signal light beam and the reference beam are caused to enter the same objective lens in the optical system illustrated in Fig. 3; thus, this optical system has an advantage over the optical system illustrated in Fig. 2 that it can be largely reduced in size.

It should be noted that the optical systems involved in recording and reproducing which utilize holography have been selectively described in Figs. 2 and 3. The optical system configuration in the optical data storage device 10 illustrated in Fig. 1 is further used for recording and reproduction of information onto and from conventional BD and HD DVD in the present embodiment.

### [Laser light]

As for a laser light commonly used for holographic recording and reproducing, a highly coherent optical beam is desired, such as an external cavity laser diode (ECLD) and a distributed feedback (DFB) laser, from the standpoint of performing holography. Meanwhile, as for an optical beam for curing, an optical beam having a low coherence is desired from the standpoint of signal quality for the purpose of avoiding formation of unnecessary holograms which may cause noise. As for a laser light used for recording and reproducing of conventional optical discs, such as BD and HD DVD, a method for reducing the coherence of the laser light is adopted, in which multimode oscillation is generated by superimposing a high frequency signal on a driving current of a laser, in order to prevent and reduce laser noise caused by a reflected light from a disc and the like.

Recording media made of photopolymer are currently receiving a high degree of expectation as media for recording holograms. However, such photopolymer recording media for holograms have a problem: the optimal reproduction conditions regarding, for example, the incident angle of the laser light entering the medium and the wavelength of the laser light are changed due to shrinkage of the media caused by the transition from monomer to polymer during recording and due to expansion and shrinkage of the polymer with temperature variation, and thereby the reproduction performance is deteriorated. In order to solve this problem, a wavelength-tunable laser, which is a wave laser having a variable wavelength, is often used for recording and reproduction of holograms. In addition, since the reproduction performance in volume holographic recording exhibits extremely high wavelength selectivity, it is necessary to adjust the wavelength of the laser in the sub-nanometer range of accuracy. On the other hand, there is no specific requirement regarding wavelength variability and wavelength control with sub-nanometer accuracy for laser lights for holographic medium curing and for recording and reproduction of information onto and from BD or HD DVD.

Due to requirements regarding coherence of a laser light and wavelength control as described above, the laser light used for curing and the laser light used for recording and reproduction of information onto and from conventional optical discs, such as BD and HD DVD, are highly compatible with the laser light used for recording and reproduction of holograms, the laser light for curing, and the laser light used for recording and reproduction of information onto and from conventional optical discs, such as BD and HD DVD.

### [A configuration of a shared drive between the medium curing optical system and the optical system for BD or HD DVD]

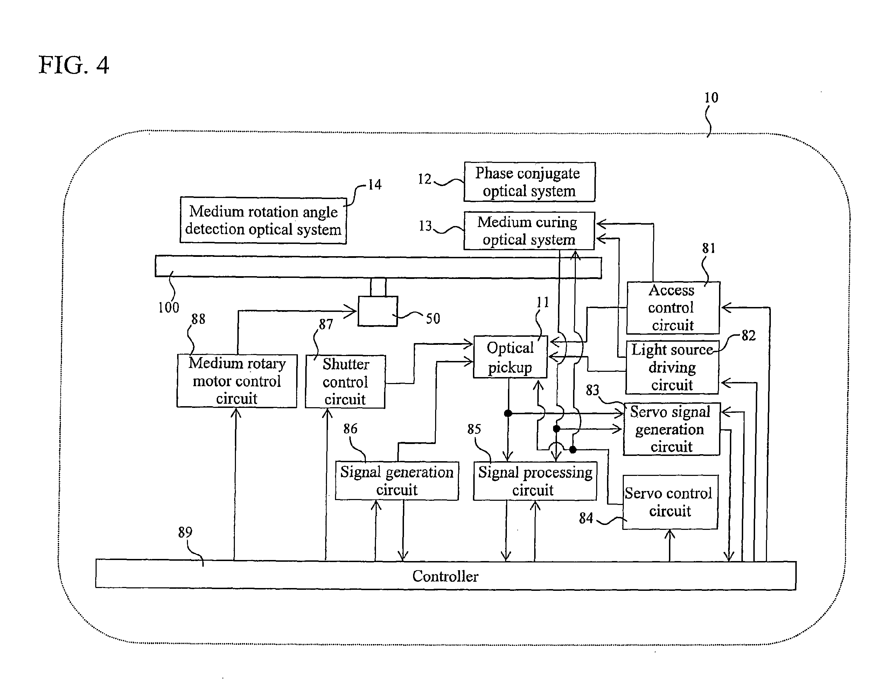

Against the background described above, an optical data storage device 10 illustrated in Fig. 4 is an example of a configuration for recording and/or reproduction of information onto and/or from BD or HD DVD, in which an optical system for recording and/or reproduction of information onto and/or from BD or HD DVD is incorporated into a medium curing optical system 13.

In the case where an optical disc 100, such as BD and HD DVD, is to be recorded and/or recovered, a necessary circuit block located in the optical data storage device 10 in Fig. 1 is used. In the present example, for example, an access control circuit 81, a light source driving circuit 82, a servo signal generation circuit 83, a servo control circuit 84, a signal processing circuit 85, a signal generation circuit 86, and a medium rotary motor control circuit 88 are also used during recording and/or reproduction of information onto and/or from BD and HD DVD. In this case, there may be independent circuit configurations each for recording and/or reproduction of holographic information, and recording and/or reproduction of information onto and/or from BD or HD DVD.

In Fig. 4, the medium curing optical system 13 is provided with a mechanism which allows the medium curing optical system 13 to slide in a radial direction of the optical disc 100, represented by BD or HD DVD. Such positional control is performed with the access control circuit 81. A predetermined light source driving current is supplied from the light source driving circuit 82 to a semiconductor laser for BD or HD DVD located inside the medium curing optical system 13, and a laser light having a predetermined light intensity for either reproduction or recording is emitted.

A signal detected by a photodetector for BD or HD DVD located inside the medium curing optical system 13 is sent to the servo signal generation circuit 83 and the signal processing circuit 85. In the servo signal generation circuit 83, a focus error signal and a tracking error signal are generated based on the detected signal. Based on these signals thus generated, an actuator located inside the medium curing optical system 13 is driven via the servo control circuit 84 to control the position of a objective lens for BD or HD DVD.

Meanwhile, in the signal processing circuit 85, an information signal recorded on the optical disc 100 is processed based on the detected signal. A part of the signal obtained in the servo signal generation circuit 83 and the signal processing circuit 85 is sent to a controller 89. The controller 89 is connected to the light source driving circuit 82, the access control circuit 81, the servo control circuit 84, and the medium rotary motor control circuit 88, which each contribute to control of the emission intensity of the semiconductor laser for BD or HD DVD, control of the access direction and position, control of the rotation of a rotary motor 50 which rotates the optical disc 100, and the like.

The single rotary motor 50 is used for the holographic recording medium 1 for holography and the optical disc 100 in the present embodiment. However, a rotary motor each for the holographic recording medium 1 and the optical disc 100, for example, may be provided and driven by the medium rotary motor control circuit 88.

### [An example of a shared configuration between the medium curing optical system and the optical system for BD or HD DVD]

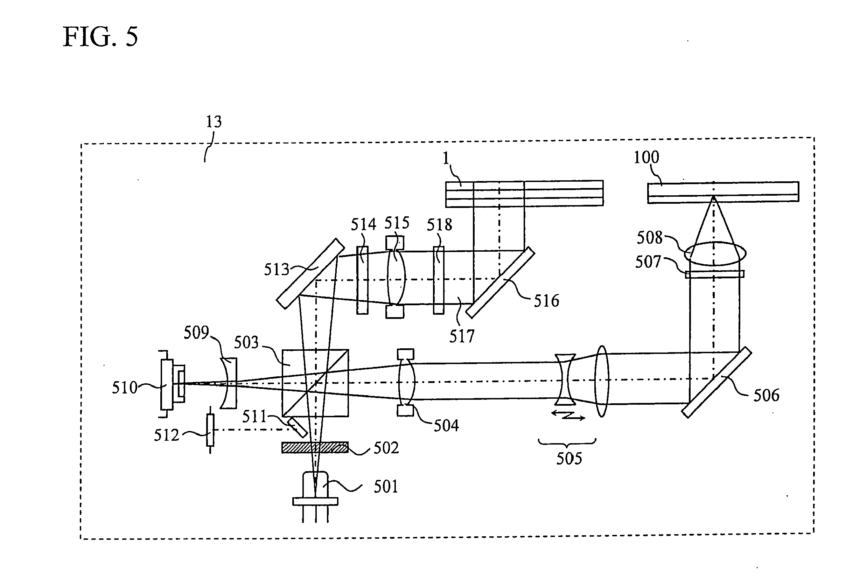

Fig. 5 illustrates an example of an optical system configuration in which the optical system 13 for holographic medium curing and the optical system for recording and/or reproduction of information onto and/or from BD or HD DVD are combined together in a single configuration.

In the present example, a laser light source 501 having low coherence is used as a light beam for holographic medium curing and for recording and/or reproduction of information onto and/or from BD or HD DVD. It is possible to select whether an optical beam emitted from the laser light source 501 is irradiated on a holographic recording medium 1 as an optical beam for curing or on an optical disc 100 as an optical beam for recording or reproducing information onto or from BD or HD DVD by switching exit polarization of a polarizing device 502 by use of the combination of the polarizing device 502 and a polarization beam splitter 503.

First, in the case where recording and/or reproduction of information onto and/or from BD or HD DVD is to be performed, an optical beam emitted from the polarizing device 502 is controlled in terms of the polarization direction so as to have an S polarization, the optical beam entering the polarization beam splitter 503 is reflected therein, and then the reflected light is guided to an optical path of a collimating lens 504. The light which has gone through the collimating lens 504 goes though a beam expander 505, travels via a mirror 506 and a quarter wave plate 507, enters an objective lens 508 in a circularly-polarized state, and focuses on an information recording surface of the optical disc 100. An optical beam reflected by the optical disc 100 travels along the route taken to reach the optical disc 100 in the opposite direction, traveling via the objective lens 508, the quarter wave plate 507, the mirror 506, the beam expander 505, and the collimating lens 504 to pass through the polarization beam splitter 503. The optical beam passed through the polarization beam splitter 503 is then converged on a photodetector 510 by a detection lens 509 so that a desired servo signal can be detected. Meanwhile, a part of a light emitted from the laser light source 501 is reflected by a mirror 511, and the reflected light is guided to the photodetector 512 so that the laser power of the laser light source 501 can be monitored.

On the other hand, in the case where a curing treatment is to be performed on a holographic medium, an optical beam emitted from the polarizing device 502 is controlled in terms of the polarization direction so as to have a P polarization. The optical beam entering the polarization beam splitter 503 goes therethrough, and then the transmitted light is guided to an optical path of a mirror 513. The light reflected by the mirror 513 goes through an optical element 514 which further reduces coherence of a laser light passing therethrough, and then becomes a substantially parallel light upon going through a lens 515. The light which has gone through the lens 515 travels via a mirror 516, and then irradiated on the holographic recording medium 1. It is desirable that a curing beam 517 going through the lens 515 be a substantially parallel light so that the irradiation area stays almost the same to the thickness direction of the recording material of the holographic recording medium 1; however, it is not applicable in some cases depending on the shape of holograms to be recorded. In the case where the light emitted from the laser light source 501 is used as a laser for curing, likewise as described above, a part of the light emitted from the laser light source 501 is reflected by the mirror 511, and the reflected light is guided to the photodetector 512 so that the laser power of the laser light source 501 can be monitored.

The function of the optical element 502 may be accomplished by a liquid crystal element in which the polarization direction of an incoming light is switched by application of voltage, a half wave plate having a rotary mechanism, a wave plate to be inserted to and removed from the optical path, or the like. The optical element 514 may be a diffuser plate or a diffuser film which diffuse an incoming light and reduce the coherence. It should be noted that the optical path in which the light emitted from the laser light source 501 is going through the polarization beam splitter 503 is used for curing, and that the optical path in which the light is reflected by the polarization beam splitter 503 is used for recording and/or reproduction of information onto and/or from BD or HD DVD in Fig. 5; however, the optical paths may switch their purposes with each other.

Furthermore, a variable aperture stop 518 may be provided in the optical path for curing in the medium curing optical system 13 in the present example so that the optical beam diameter of the curing beam 517 can be changed according to the size of a region on the holographic recording medium 1, which is subjected to a curing treatment. When the variable aperture stop 518 is provided, it is possible to change the optical beam diameter of the curing beam without changing the energy density of the curing beam 517 irradiated to the holographic recording medium 1.

By using a single light source for generating an optical beam for curing and for generating a optical beam for recording or reproduction of BD or HD DVD and by using a single optical path for the optical beam for curing and the optical beam for recording or reproduction of BD or HD DVD, as in the configuration described above, it is possible to reasonably place multiple optical system configurations together into a single case. Hence, such a configuration has an advantage that a device can be made smaller.

Regarding a rotary motor which rotates the holographic recording medium 1 and the optical disc 100, such as BD and HD DVD, there may be a single rotary motor for both purposes, or, for example, there may be a rotary motor for each of the purposes which is driven by a medium rotary motor control circuit

Each of the configurations in Fig. 1 has been described as configurations especially involved in recording and reproduction using holography; however, it is certainly possible to use these configurations as well for recording and reproduction of conventional BD and HD DVD.

In addition, it is possible to obtain a thinner optical data storage device 10 by arranging the optical pickup 11 and the medium curing optical system 13 on the same side to the medium. It can be achieved by, for example, arranging the optical pickup 11 and the medium curing optical system 13 on the opposite side of the rotary motor 50 shown in Fig. 1 without causing physical interference between the optical pickup 11 and the medium curing optical system 13.

### [Operation flow]

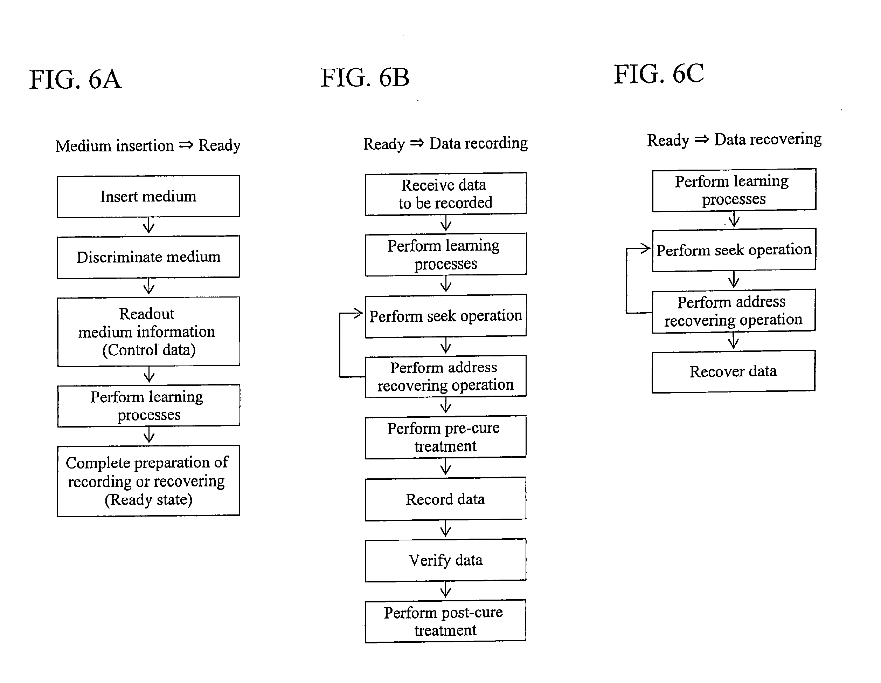

Figs. 6A to 6C illustrate an operation flow of recording and reproducing in the optical data storage device 10. In the following section, a flow regarding recording and reproduction using holography will be especially described.

Fig. 6A illustrates an operation flow from insertion of a holographic recording medium 1 into the optical data storage device 10 to completion of the preparation for recording or reproduction. Fig. 6B illustrates an operation flow from the completion of the preparation to recording of information to the holographic recording medium 1. Fig. 6C illustrates an operation flow from the completion of the preparation to reproduction of the information recorded in the holographic recording medium 1.

As shown in Fig. 6A, being inserted with the medium, the optical data storage device 10 performs medium discrimination to determine, for example, whether or not the inserted medium is for recording or reproducing digital information by using holography. If the medium is determined to be a holographic recording medium for recording or reproducing digital information by using holography in the result of the medium determination, the optical data storage device 10 reads out control data provided in the holographic recording medium to obtain information, for example, regarding the holographic recording medium itself and regarding various setting conditions for recording or reproduction. After reading out the control data, the optical data storage device 10 performs learning processes regarding various adjustments according to the control data and the optical pickup 11. After going through this flow, the optical data storage device 10 completes the preparation for recording or reproduction.

In the operation flow from the completion of the preparation to the recording of information, as shown in Fig. 6B, the optical data storage device 10 first receives data to be recorded, and sends information corresponding to the received data to the spatial light modulator located in the optical pickup 11. Then, the optical data storage device 10 performs various learning processes as necessary in advance in order to record high-quality information to the holographic recording medium, and arranges the optical pickup 11 and the medium curing optical system 13 at a predetermined position in the holographic recording medium while repeating a seek operation and an address regeneration operation. Thereafter, the optical data storage device 10 performs the pre-curing treatment on a predetermined region by using an optical beam emitted from the medium curing optical system 13, and records data by using a reference light and a signal light emitted from the optical pickup 11.

After recording the data, the optical data storage device 10 verifies the data as necessary, and performs the post-curing treatment by using an optical beam emitted from the medium curing optical system 13.

In the operation flow from the completion of the preparation to the regeneration of the recorded information, as shown in Fig. 6C, the optical data storage device 10 performs various learning processes as necessary in advance in order to reproduce high quality information from the holographic recording medium. Then, the optical data storage device 10 arranges the optical pickup 11 and the phase conjugate optical system 12 at a predetermined position in the holographic recording medium while repeating a seek operation and an address regeneration operation. Thereafter, the information recorded in the holographic recording medium is read out with a reference light emitted from the optical pickup 11.

### [Another example of a shared configuration between the medium curing optical system and the optical system for BD or HD DVD]

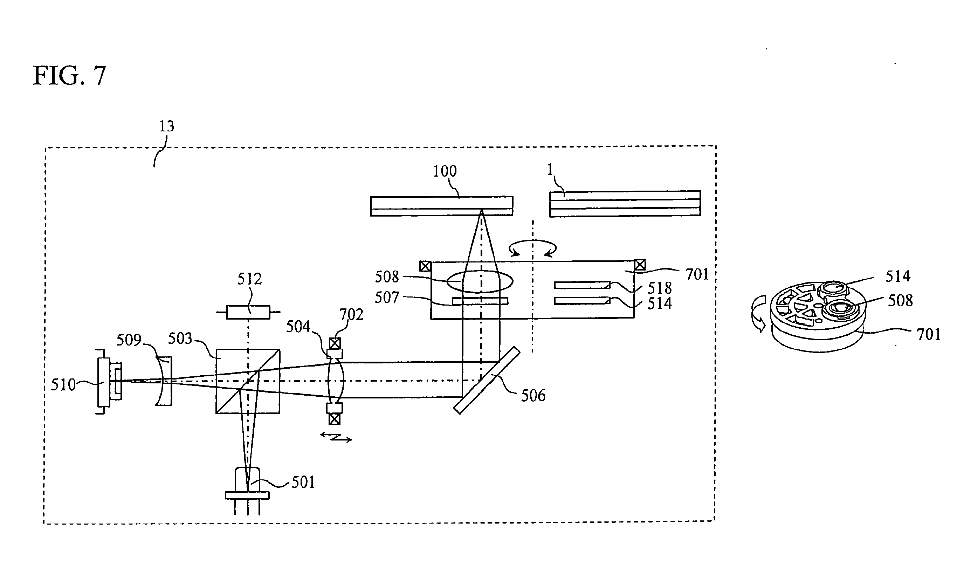

Fig. 7 illustrates another example of the optical system configuration in which the optical system 13 for holographic medium curing and the optical system for recording and/or reproduction of information onto and/or from BD or HD DVD are combined together in a single configuration in the optical data storage device 10.

In the present example, the low coherence laser light source 501 is used as a light beam for holographic medium curing and for recording and/or reproduction of information onto and/or from BD or HD DVD. It is possible to select whether an optical beam emitted from the laser light source 501 is irradiated on the holographic recording medium 1 as a light beam for curing or on the optical disc 100 as a light beam for recording or reproducing information onto or from BD or HD DVD by switching of a lens actuator 701.

First, in the case of recording and/or reproduction of information onto and/or from BD or HD DVD, a light which has gone through the collimating lens 504 travels via the mirror 506 and the quarter wave plate 507, enters the objective lens 508 in a circularly-polarized state, and converges on an information recording surface of the optical disc 100. A light beam reflected by the optical disc 100 travels along the same route taken to reach the optical disc 100 in the opposite direction, traveling via the objective lens 508, the quarter wave plate 507, the mirror 506, and the collimating lens 504 to pass through the polarization beam splitter 503. A light beam passed through the polarization beam splitter 503 is converged on the photodetector 510 by the detection lens 509 so that a desired servo signal can be detected. In the case of recording and/or reproduction of information onto and/or from BD, spherical aberration can be corrected by driving the collimating lens 504 with an actuator 702 in an optical axis direction. Furthermore, a part of a light emitted from the laser light source 501 is guided to the photodetector 512 so that the laser power of the laser light source 501 can be monitored.

On the other hand, in the case where a curing treatment is performed on a holographic medium, it is configured that the light beam goes through an optical path different from that via the objective lens 508 by switching the lens actuator 701. The light which has gone through the collimating lens 504 and therefore become a substantially parallel light travels via the mirror 506, goes through the optical element 514 which further reduces coherence of a laser light passing therethrough, and then irradiated on the holographic recording medium 1. It is desirable that a curing beam be a substantially parallel light so that the irradiation area stays almost the same to the thickness direction of the recording material of the holographic recording medium 1; however, it is not applicable in some cases depending on the shape of holograms to be recorded. In the case where the light emitted from the laser light source 501 is used as a laser for curing, likewise as described above, a part of a light emitted from the laser light source 501 is guided to the photodetector 512 so that the laser power of the laser light source 501 can be monitored.

Regarding the medium curing optical system 13 in the present example, a variable aperture stop 518 may be provided in the optical path for curing so that the light beam diameter of the curing beam can be changed according to the size of the region on the holographic recording medium 1, which is subjected to a curing treatment. When the variable aperture stop 518 is provided, it is possible to change the light beam diameter of the curing beam without changing the energy density of the curing beam irradiated to the holographic recording medium 1.

### [Another example of a shared configuration between the medium curing optical system and the optical system for BD or HD DVD]

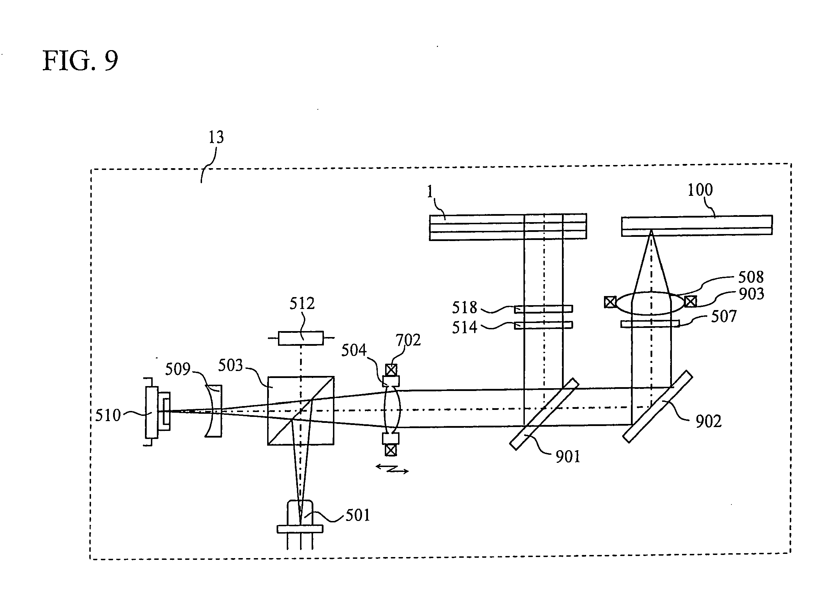

Fig. 9 illustrates another example of the optical system configuration in the case where the optical system 13 for holographic medium curing and the optical system for recording and/or reproduction of information onto and/or from BD or HD DVD are combined together in a single configuration in the optical data storage device 10. It should be noted that descriptions that overlap those provided above are omitted.

In the present example, the medium curing optical system 13 is provided with mirrors 901 and 902. While a reflected light from the mirror 901 is utilized for holographic medium curing, a transmitted light from the mirror 901 is utilized for recording and/or reproduction of information onto and/or from BD or HD DVD. In this case, a half mirror and the like can be used as the mirror 901. In this configuration, a lens actuator 903 is capable of driving only optical elements for BD or HD DVD, such as the objective lens 508 and the quarter wave plate 507; thus, the lens actuator 903 can be improved in terms of the size and the performance. The reflected light from the mirror 901 is used for a curing treatment of the holographic medium and the transmitted light is used for recording and/or reproduction of information onto and/or from BD or HD DVD in the medium curing optical system 13 illustrated in Fig. 9; however, the reflected light and the transmitted light may switch the purposes with each other.

Furthermore, the medium curing optical system 13 may be provided with a mechanism for inserting and removing the mirror 901 in and from the optical path. In the case of recording and/or reproduction of information onto and/or from BD or HD DVD, it may be configured that the mirror 901 is removed from the optical path. Having such a configuration, it is possible to efficiently utilize a light emitted from a laser light source for curing of a holographic medium and for recording and/or reproduction of information onto and/or from BD or HD DVD.

In addition, the optical path for holographic medium curing may be provided with the optical element 514, which further reduces coherence of a laser light passing therethrough, and the variable aperture stop 518, which allows the light beam diameter of the curing beam to be changed according to the size of the region on the holographic recording medium 1, which is subjected to a curing treatment.

### [Another example of a shared configuration between the medium curing optical system and the optical system for BD or HD DVD]

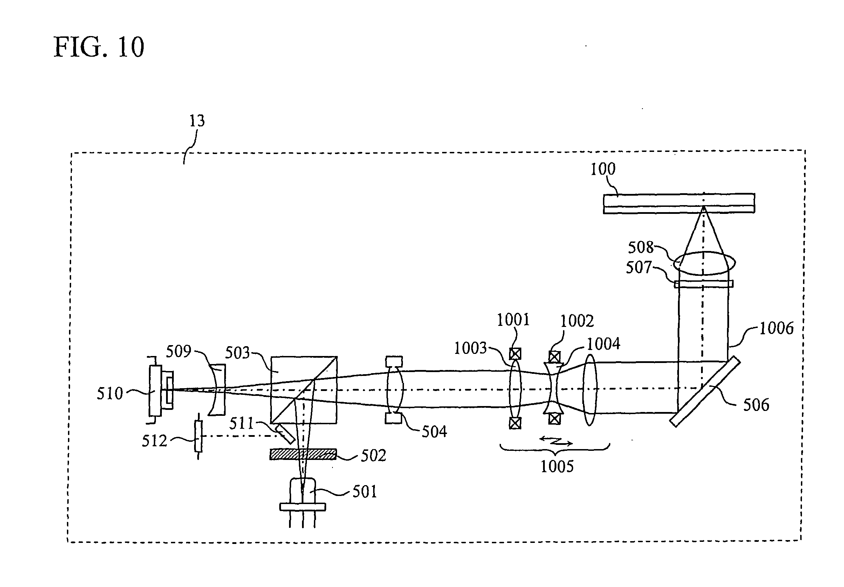

Fig. 10 illustrates another example of the optical system configuration in the case where the optical system 13 for holographic medium curing and the optical system for recording and/or reproduction of information onto and /or from BD or HD DVD are combined together in a single configuration in the optical data storage device 10. It should be noted that descriptions that overlap those provided above are omitted.

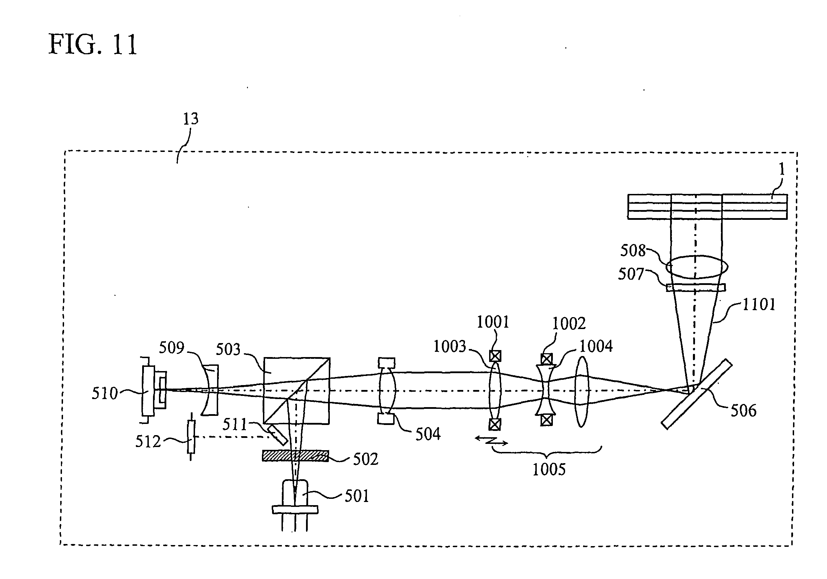

In the present example, the medium curing optical system 13 is provided with a beam expander 1005 composed of lens actuators 1001 and 1002 and lenses 1003 and 1004. In the case of recording and/or reproduction of information onto and/or from BD or HD DVD, the lens actuator 1002 is driven to make a light bean 1006 passing through the beam expander 1005 a substantially parallel light. The light beam 1006 which has become a circularly-polarized light by the quarter wave plate 507 is converged on the optical disc 100 by the objective lens 508. In the case of recording and/or reproduction of information onto and/or from BD, spherical aberration can be corrected by driving the lens 1004 with the actuator 1002 in an optical axis direction. Meanwhile, in the case of curing of the medium, as shown in Fig. 11, the lens actuator 1001 is driven so that a light beam 1101 passing through the beam expander 1005 is converged on the substantially front-side focus surface of the objective lens 508. In this configuration, the light beam 1101 passing through the objective lens 508 is made to be a substantially parallel light and then irradiated on the holographic recording medium 1.

The beam expander 1005 drives the lens 1004 to correct spherical aberration of BD. In the meanwhile, the beam expander 1005 drives the lens 1003 to convert a convergent light emitted from the field lends 508, which is used for recording or reproduction of information onto or from BD or HD DVD, into a substantially parallel light, which is used for holographic medium curing. Accordingly, the beam expander 1005 driving the lens 1003 has a higher sensitivity to change in a degree of divergence and convergence of light beam than the beam expander 1005 driving the lens 1004. The lens 1003 is shown as a convex lens and the lens 1004 is shown as a concave lens in the figure; however, other combinations of lenses may be employed as long as the light becomes a convergent light after emitted from the lens 508 during recording information onto BD and becomes a substantially parallel light after emitted from the objective lens 508 during the curing treatment of a holographic medium.

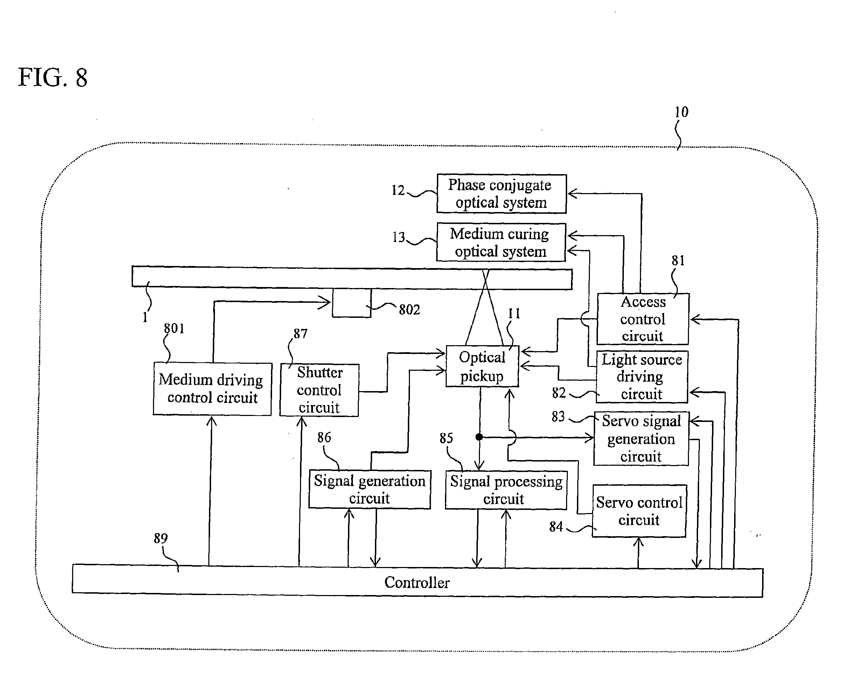

In the description above, the holographic recording medium 1 has been described as a disc-shaped medium; however, media having other shapes, for example, a card-shaped medium, may be employed. Fig. 8 illustrates an overall configuration of an optical data storage device with a card-shaped holographic recording medium 1. The holographic information recording and reproducing device 10 is provided with an optical pickup 11, a phase conjugate optical system 12, a medium curing optical system 13, and a medium driving motor 802. It is configured that the holographic recording medium 1 can be driven by a controller 89 which controls a medium driving motor 802 via a medium driving control circuit 801. Although the holographic recording medium 1 is configured to be driven in Fig. 8, a mechanism for sliding the position of the optical pickup 11, the phase conjugate optical system 12, and the medium curing optical system 13, instead of the configuration for driving the holographic recording medium 1, may be provided to perform positional control through an access control circuit 81.

## Claims

1. An optical data storage device, comprising:
a first optical pickup (11) including:
a first laser light source (201, 301);
an optical element (205, 305) for dividing a laser light emitted from the first laser light source into laser lights of a first optical path and a second optical path;
an optical system (206 - 213, 306 - 309), having a spatial light modulator (208, 308) and a photodetector (218, 318), either for irradiating a holographic recording medium with the laser light of the first optical path modulated by the spatial light modulator as a signal light, or for causing a recovered light from the holographic recording medium to enter the photodetector; and
an optical system (214 - 219, 314 - 3219) for irradiating the holographic recording medium with the laser light of the second optical path as either a reference light or a phase conjugate light of the reference light; and
a second optical pickup (13) including:
a second laser light source (501);
an optical system (513 - 518) for irradiating the holographic recording medium with a laser light emitted from the second laser light source as an optical beam for performing a cure treatment;
an optical system (504 - 508) for irradiating any one optical disc of a BD and an HD DVD with the optical beam emitted from the second laser light source to either record or reproduce information onto or from the optical disc; and
an optical system for detecting a reflected light reflected from the optical disc.

2. An optical data storage device, comprising:
a first laser light source (201, 301);
an optical element (205, 305) for dividing an optical beam emitted from the first laser light source into first and second optical beams of a first optical path and a second optical path;
a signal light optical system (206 - 213, 306 - 309) for guiding the first optical beam, which is obtained from the optical beam divided by the optical element, proceeding in the first optical path to a holographic recording medium as a signal light,
a reference light optical system (214 - 219, 314 - 319) for guiding the second optical beam, which is obtained from the optical beam divided by the optical element, proceeding in the second optical path to the holographic recording medium as a reference light;
a second laser light source (501);
a curing treatment optical system (513 - 518) for performing a curing treatment after an optical beam emitted from the second laser light source is guided to the holographic recording medium; and
an optical disc optical system (504 - 508) for guiding the optical beam emitted from the second laser light source to any one optical disc of a BD and an HD DVD.

3. The optical data storage device according to claim 1,
wherein
the optical beam for performing the curing treatment is a substantially parallel light, and
the optical beam irradiated on the any one optical disc of a BD and an HD DVD is a convergent light.

4. The optical data storage device according to claim 1,
wherein the second optical pickup includes:
an optical element for changing a polarization state of the optical beam emitted from the second laser light source; and
an optical element for switching the optical path of the optical beam between the first optical path and the second optical path depending on the polarization state of the optical beam, and
wherein
the optical beam proceeding in the first optical path serves as the optical beam for performing the cure treatment, and
the optical beam proceeding in the second optical path serves as the optical beam that is converged and irradiated on the any one optical disc of a BD and an HD DVD.

5. The optical data storage device according to claim 1,
wherein the second optical pickup includes:
an objective lens for converging the optical beam emitted from the second laser light source on the any one optical disc of a BD and an HD DVD; and
a lens actuator for driving the objective lens relative to an optical axis, and
wherein
the lens actuator is provided with an optical path allowing the optical beam for performing the curing treatment to go therethrough, the optical path being different in position from that of the objective lens, and
the lens actuator switches between the optical paths to which the optical beam from the second laser light source goes after passing through the lens actuator, according to whether to perform the curing treatment or to perform recording and reproduction of information onto and from the any one optical disc of a BD and an HD DVD.

6. The optical data storage device according to claim 1,
wherein the second optical pickup includes:
a lens for converting the optical beam emitted from the second laser light source, into a substantially parallel light; and
an optical element for switching an optical path of a light transmitted through the lens, between the first optical path and the second optical path, and
wherein
the optical beam proceeding in the first optical path serves as an optical beam for performing the cure treatment, and
the optical beam proceeding in the second optical path serves as an optical beam that is converged and irradiated on the any one optical disc of a BD and an HD DVD.

7. The optical data storage device according to claim 1,
wherein the second optical pickup includes:
an objective lens for converging the optical beam emitted from the second laser light source on the any one optical disc of a BD and an HD DVD; and
a beam expander for changing a degree of divergence and convergence of the optical beam, and
wherein
the beam expander changes the degree of divergence and convergence of the optical beam depending on whether to perform the curing treatment or to perform recording and reproduction of information onto and from the any one optical disc of a BD and an HD DVD.

8. The optical data storage device according to claim 7, wherein,
in the case where the curing treatment is to be performed, the light emitted from the objective lens is converted into a substantially parallel light, and,
in the case where the any one optical disc of a BD and an HD DVD is irradiated, the light emitted from the objective lens is converted into a convergent light.

9. The optical data storage device according to claim 7,
wherein the beam expander includes two mechanisms for changing the degree of divergence and convergence of the optical beam, and
wherein,
in the case where the curing treatment is to be performed, the beam expander drives the mechanism having a higher sensitivity in changing the degree of divergence and convergence, and,
in the case where recording and reproduction of information onto and from the any one optical disc of a BD and an HD DVD is to be performed, the beam expander drives the mechanism having a lower sensitivity in changing the degree of divergence and convergence.

10. The optical data storage device according to claim 1, wherein the laser light generated from the second laser light source has lower coherence than that of the laser light generated from the first laser light source.

11. The optical data storage device according to claim 1, wherein the first optical pickup and the second optical pickup are arranged on the same side to the medium.

12. The optical data storage device according to claim 1, wherein the second optical pickup is provided with an aperture stop, in the optical path of the optical beam for the curing treatment, the aperture stop being capable of changing the light beam diameter of the beam.
